# EUROPEAN PATENT APPLICATION

(11) **EP 2 423 517 A1**
(43) Date of publication of application: **29.02.2012**
(21) Application number: 11190207.8
(22) Date of filing: 15.03.2007
(51) Int. Cl.: F16B 13/12

(54) **Fixing apparatus and method**

(30) Priority: 15.03.2006 GB 0605164
(62) Divisional of application: 07712530.0
(71) Applicant: Cawston Field IP Limited, Frankton, Warwickshire CV23 9PB (GB)
(72) Inventor:
(74) Representative: Holmes, Matthew William

(57) **Abstract**

An apparatus is disclosed for fixing an object (104) to a wall surface having an outer plasterboard layer (30) and an underlying supporting structure (12), the first layer being spaced from the supporting structure by a cavity (34). In one embodiment, the apparatus comprises a first member (52) arranged to be inserted in a recess (18) provided in the supporting structure (12) and a second member (62) arranged to cooperate with the first member (52) so as to secure the latter within the recess (18). The first member (52) provides an anchoring for a threaded fastener (22). In use, the object (104) to be fixed can be clamped between the threaded fastener (22) and at least one of the first and second members (62,52). Advantageously, the invention can support relatively heavy loads whilst reducing, or substantially eliminating, lateral loading of the plasterboard layer thereby reducing the likelihood of deformation or failure.

## Description

The present invention relates to a fixing apparatus and method and particularly, but not exclusively, to an apparatus and method for fixing an object to a surface, such as a wall. The invention may find advantageous application in the fixing of objects to so-called dry-lined or cavity walls. Aspects of the invention relate to an apparatus, to a method, to a kit and to a structure.

Dry-lined walls, also known as cavity walls, generally comprise an underlying support structure, such as a solid brick or blocked wall, which is overlaid by a dry sheeting material, such as plasterboard. The plasterboard is often adhered to the exposed surface of the support structure by dabs of adhesive which, when cured, support the plasterboard in a spaced manner from the support structure, so as to define a gap or "cavity" therebetween. In an alternative arrangement, the plasterboard is secured to batons fixed to the support structure such that the gap or cavity between the plasterboard and the support structure is substantially equal to the thickness of the batons.

The securing of objects to such cavity walls can be difficult, owing to the relatively fragile nature of the plasterboard. A number of existing devices, known generally as wall plugs or wall anchors and adapted for use with dry-lined walls, are available and are arranged to secure a standard threaded fastener, such as a screw, either to the plasterboard itself or to the underlying support structure. Such devices may be suitable for supporting relatively light loads but tend to impose compressive, tensile and/or shear stresses on the plasterboard which can, in some cases, lead to damage or failure thereof. Furthermore, care must be taken during installation of many such devices to prevent cosmetic damage to the plasterboard.

It is an aim of the invention to address this issue and to improve upon known technology. Embodiments of the invention may provide a fixing apparatus, suitable for use with a cavity or dry-lined wall, which addresses disadvantages of existing fixing devices. Other embodiments of the invention may provide a method of fixing an object to a wall which addresses disadvantages of known techniques. Further aims and advantages of the invention will become apparent from the following description, claims and drawings.

Aspects of the invention therefore provide an apparatus, a method, a kit and a structure as claimed in the appended claims.
According to another aspect of the present invention there is provided an apparatus for fixing an object to a wall surface having an outer layer and an underlying supporting structure, the outer layer being spaced from the supporting structure by a cavity, the apparatus comprising a first member arranged to be inserted into a recess provided in the supporting structure and to provide an anchoring for a threaded fastener and a second member arranged to cooperate with the first member so as to secure the latter within the recess, the arrangement being such that, in use, the object may be clamped between a part of the threaded fastener and at least one of the first and second members.

In one embodiment, the outer layer comprises a plasterboard layer or surface and the supporting structure comprises a brick or blocked wall.

Advantageously, by clamping the object between the threaded fastener and either the first or the second member, the apparatus can reduce or substantially eliminate lateral or horizontal loading on the outer layer, thereby reducing deformation and/or cracking thereof. The loading applied to the fixing may thus be carried substantially entirely by the supporting structure rather than the outer layer, thereby greatly increasing the load capacity of the fixing.

In an embodiment, the first member comprises a bridging member having an elongate body and an external screw thread for threaded engagement with the second member. The screw thread may extend along only a portion of the external surface of the body or may extend along substantially the full length of the body.

In an embodiment, the second member comprises a plug member arranged to be received in the recess. The plug member may include an axial bore for receiving at least a part of the second member therein.

The second member may be arranged to deform as the first member is inserted therein so as to create a frictional engagement, or interference fit, between the second member and the walls or boundaries of the recess thereby to secure the first member and/or the second member within the recess.

In an embodiment, the first member includes an internal bore for receiving the threaded fastener. The internal bore may be provided with an internal screw thread for threaded engagement with the threaded fastener. Alternatively, or in addition, the internal bore in the first member may be adapted to receive or accommodate an anchor member for receiving the threaded fastener.

The anchor member may be a conventional wall plug-type device, arranged to deform and/or expand as the threaded fastener is inserted therein so as to create a frictional engagement, or interference fit, between the anchor member and the wall of the internal bore thereby to secure the anchor member within the bore.

In an embodiment, the first member comprises locking means for hindering or substantially preventing withdrawal of the anchor member from the internal bore. The locking means may comprise at least one radially inwardly directed projection or rim arranged to cooperate with a corresponding recess provided on an outer surface of the anchor member when the latter is inserted into the internal bore.

In an embodiment, the internal bore includes an internal screw thread for threaded engagement directly with the threaded fastener.

In an embodiment, the second member includes means for preventing its insertion into the recess beyond a predetermined depth. For example, the second member may include a radially outwardly directed flange arranged for abutment with a surface of the plasterboard layer thereby to prevent insertion of the first member therebeyond.

In an embodiment, the first member includes means for facilitating insertion of the first member into the second member. The second member may include at least one recess and/or projection adapted to cooperate and/or engage with a suitable tool or device for twist-driving or screwing the first member into the second member. For example, the first member may include a recess or internal bore, an inner wall of which is adapted to receive a hexagonal key or the like.

The second member may be formed from a generally flexible and/or resilient material such as a plastics material. The anchor member, where present, may be formed from a similar material. The first member may be formed from a generally rigid, and preferably substantially incompressible, material such as steel, aluminium, zinc or other material, including a plastics material.

Advantageously, when the first member is inserted in the second member and the threaded fastener is inserted in the first member, either directly or via the anchor member, the threaded fastener is held substantially rigidly relative to the underlying structure of the wall.

According to another aspect of the invention there is provided an apparatus for fixing an object to a structure having outer layer and an inner layer, the inner and outer layers being spaced from one another by a cavity, the apparatus comprising support means for insertion into a recess in the inner layer and anchor means for anchoring at least a portion of a threaded fastener in and/or to the support means, the arrangement being such that, in use, the object may be clamped between at least a part of the threaded fastener and the support means.

According to yet another aspect of the invention there is provided an apparatus for fixing an object to a wall surface having an outer layer and an underlying supporting structure, the first layer being spaced from the supporting structure by a cavity, the apparatus comprising a first member arranged to locate in a recess provided in the supporting structure and anchor means for anchoring a threaded fastener within the first member, the arrangement being such that, in use, the object may be clamped between the threaded fastener and the first member.

According to a further aspect of the invention there is provided a fastener anchor for anchoring a threaded fastener to a cavity surface structure, the apparatus comprising a first member arranged to be inserted in a recess in a substrate or supporting layer of the structure, the first member including an anchoring device for anchoring the threaded fastener to the first member such that, in use, an object to be mounted to the structure may be clamped between the threaded fastener and the first member.

According to a still further aspect of the invention there is provided an apparatus for fixing an object to a cavity wall having an outer plasterboard layer and an underlying brick or block layer, the layers being spaced from one another by a cavity, the apparatus comprising support means for insertion into a recess in the brick or block layer and anchor means for anchoring at least a portion of a threaded fastener in and/or to the support means, the arrangement being such that, in use, the object may be clamped between at least a part of the threaded fastener and the support means.

According to another aspect of the invention there is provided a method for fixing an object to a wall surface having at least one plasterboard layer and an underlying supporting structure, the first layer being spaced from the supporting structure by a cavity, the method comprising drilling a recess in the supporting structure, through the plasterboard layer, inserting a wall-plug type device into the recess; inserting a generally rigid member into the wall-plug type device such that a free end of the rigid member lies substantially flush with, or slightly raised from, an exposed surface of the plasterboard layer, inserting a threaded fastener through a fixing hole in the object and into the rigid member, and threadedly engaging the threaded fastener into the rigid member thereby to clamp at least a part of the object between the threaded fastener and the rigid member and/or the wall-plug type device.

According to another aspect of the invention there is provided an apparatus for fixing an object to a wall or other structure having an outer layer and an underlying supporting structure spaced therefrom by a cavity, the apparatus comprising support means arranged to be inserted through the outer layer and into a recess in the supporting structure so as to bridge the cavity and a bore formed in the support means for anchoring at least a portion of a threaded fastener to the support means, characterised in that the support means comprises an external thread adapted for threaded engagement with the material of said supporting structure.

In an embodiment the arrangement is such that, in use, the object may be clamped between at least a part of the threaded fastener and the support means.

In an embodiment the bore includes an internal screw thread for threaded engagement with the threaded fastener.

In an embodiment the support means comprises at least one recess or projection adapted to cooperate with a tool or device for twist-driving the support means into the recess.

In an embodiment the support means includes at least one recess adapted to cooperate and/or engage with a hexagon key or screwdriver for screwing the support means into the recess.

In an embodiment the support means comprises a bridging member formed from a generally rigid material such as a metal or plastics material.

In an embodiment the support means is formed from steel.

According to a further aspect of the invention there is provided a bolt comprising a shaft having an external screw thread adapted for engagement in a recess formed in a substrate and an internally-threaded bore formed in the shaft for anchoring at least a portion of a threaded fastener therein.

In an embodiment the screw thread is adapted for engagement with a brick, block or concrete substrate.

In an embodiment, the bolt comprises a concrete bolt.

According to another aspect of the invention there is provided a kit comprising a threaded fastener and an apparatus or a bolt of the preceding aspects.

According to yet another aspect of the invention there is provided a method for fixing an object to a wall surface having an outer layer and an underlying supporting structure, the outer layer being spaced from the supporting structure by a cavity, the method comprising drilling through the outer layer and into the supporting structure to form a recess therein, threadedly engaging at least a part of a first member in the recess, inserting a threaded fastener through a fixing hole in the object and into the first member and screwing the threaded fastener into the first member thereby to clamp at least a part of the object between a portion of the threaded fastener and the first member.

In an embodiment the step of securing comprises threadedly engaging the first member in the recess such that a free end of the first member lies substantially flush with, or slightly raised from, an outer surface of the outer layer.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a cross-sectional view through a standard plastered wall;
Figure 2 illustrates the fixing of an object to the wall of Figure 1;
Figure 3 is a cross-sectional view through a contemporary dry-lined or cavity wall;
Figure 4 illustrates a known arrangement for fixing an object to a dry-lined or cavity wall, such as that shown in Figure 3;
Figure 5a is a cross-sectional view of a first member of one form of apparatus embodying the invention;
Figure 5b is an axial view of the first member shown in Figure 5a;
Figure 5c is a perspective view of a second member of one form of apparatus embodying the invention;
Figures 6 to 10 illustrate steps of a method for fixing an object to a dry-line wall using the apparatus of Figures 5a - 5c;
Figure 11 is a cross-sectional view of another form of apparatus embodying the invention;
Figure 12 is a cross-sectional view of yet another form of apparatus embodying the invention;
Figure 13 is a cross-sectional view of a further form of apparatus embodying the invention;
Figure 14 is a cross-sectional view of a still further form of apparatus embodying the invention; and
Figure 15 is a cross-sectional view of yet another form of apparatus embodying the invention;

In the drawings, as far as possible, like reference numerals indicate like parts. Furthermore, it will be understood that any references to direction or orientation are used only by way of example and in the context of the drawings and are not intended to be limiting in any way.

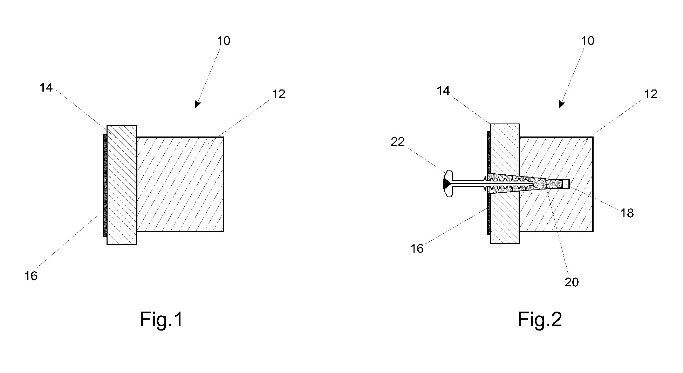

The interior surface of the walls 10 of houses or other buildings are often applied with a finishing treatment comprising coating the surface with a layer of plaster to provide a smooth, aesthetically pleasing finish which may then be painted or otherwise decorated. As illustrated in Figure 1, one such technique involves applying a relatively thick, base layer 14 of plaster to the exposed surface of an underlying brickwork support structure 12 and then covering this base layer 14 with a finer plaster "skim" 16 to leave a smoother, more easily maintained finish than would be achieved with just the base coat alone.

The fixing of objects to walls finished in this manner is relatively easy, as shown in Figure 2. In general, a hole 18 is drilled through the skim and base plaster layers 16, 14 and into the brickwork 12 and a conventional wall plug 20 is inserted therein. Such wall plugs 20, which are also known as wall anchors, will be well known to the skilled person and further detail is not included herein. A standard fixing screw 22 can then be twist-driven into the wall plug 20 which, being formed from a deformable material such as a plastics material, expands and/or deforms such that it becomes securely anchored within the hole 18. The fixing screw 22 can then be used to support an object (not shown) on the wall 10 or to clamp it between the screw head and the plaster 16.

Owing to the nature of the plaster arrangement, this technique is quick and easy for the user and results in a highly secure fixing able to support relatively heavy loads. Much of the load is carried by the brickwork and any compressive stresses on the plaster layers have little or no detrimental effect on aesthetics or reliability.

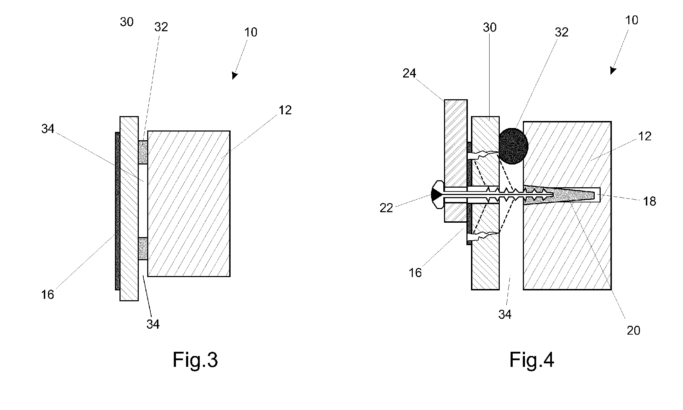

More recently, however, it has become conventional to line interior walls with a dry sheeting material known as plasterboard. This material generally consists of a thick layer of set plaster sandwiched between two paper or other cellulose-based retaining sheets. As illustrated in Figure 3, plasterboard sheets 30 are fixed to the surface of a brickwork substrate layer 12 by means of a specialised adhesive, applied to the wall surface in a so-called "dot and dab" formation in which one or more adhesive beads 32 are applied to the wall surface at spaced intervals. Each plasterboard sheet 30 is then offered up to the wall 12 and pressed against the adhesive beads 32 which act to secure the sheet to the brickwork substrate. Due to the viscosity of the adhesive material, the plasterboard sheet 30 is usually not pressed into direct contact with the brickwork 12 but, instead, leaves an air gap or cavity 34, often between 5 - 30mm in depth, between the surface of the brickwork 12 and the opposing surface of the sheet 30. This type of arrangement is known as "dry-lining" and is completed by the application of a thin "skim" coat of plaster 16 in a similar manner to that described previously.

The primary advantages of dry lining are that the plasterboard sheets 30 are relatively inexpensive and can be applied to the wall 12 quickly. Furthermore, the skim coat 16 can be applied almost immediately, eliminating the disadvantage of conventional plastering wherein the base coat 14 must be allowed to dry before the skim coat 16 is applied. The overall finishing of the wall 10 can thus be achieved with greater speed and at lower cost than through the use of previous techniques.

However, due to the relatively fragile nature of the plasterboard sheeting 30, dry-lined walls present certain disadvantages in the fixing of objects to the wall. For example, it is generally not possible to secure objects to the wall by directly driving a threaded fastener, such as a standard fixing screw, into the plasterboard since the screw is unable to achieve a sufficiently firm grip in the material in order to support a load of any significance.

One technique that is sometimes used for dry-lined walls, shown in Figure 4, is similar to that described above with reference to Figure 2. Specifically, a hole or recess 18 is drilled through the plasterboard sheeting 30 and into the underlying brickwork 12. A conventional wall plug or anchor 20 is inserted into the hole 18 and then a standard fixing screw 22 is twist-driven into the wall plug 20 to secure the object 24 to the wall. In this arrangement, the screw 22 is required to be longer than that used in the arrangement of Figure 2 since it must bridge the cavity 34 between the plasterboard sheeting 30 and the brickwork 12 in order to engage the wall plug 20 to a sufficient depth to expand it fully.

The resulting arrangement is able to support relatively heavy loads since a large proportion of the vertical loads are carried within the brickwork. However, a significant bending moment may be imposed upon the screw by the weight of the object which, in turn, may exert a vertical loading on the plasterboard sheeting 30. Furthermore, as the screw 22 is driven further into the wall plug 20, a high lateral loading, that is to say a loading parallel to the longitudinal axis of the screw and in the driving direction thereof, may be imposed upon the plasterboard 30 as the screw 22 tends to pull the sheeting 30 towards the brickwork 12. This frequently results in deformation and/or fracturing of the plasterboard 30, as represented by the dashed lines shown in Figure 4. While this will not itself prevent the fixing of the object to the wall, the deformation or fracture of the plasterboard 30 is unsightly and can be costly and time consuming to repair.

Other solutions (not shown in the drawings) consist of specially shaped anchors which are driven directly into the plasterboard, the threaded fastener then being secured within the anchor. In this arrangement, the anchor is provided with a wide drilling flange which can be driven into the plasterboard 30 without excessive damage to the sheet material. Although little or no lateral or horizontal loading is imposed upon the plasterboard by such fixing devices, they cannot support loads of any significance since the vertical loading is applied only through the plasterboard itself. No support is provided by the brickwork itself.

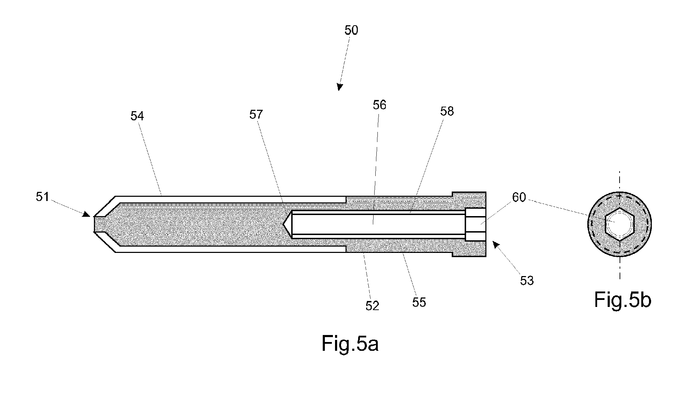

Referring now to Figure 5a, a first form of apparatus embodying the invention is shown in cross section generally at 50. The apparatus 50 comprises support means consisting of a first member 52, referred to herein as a bridging member. In the illustrated embodiment, the bridging member 52 takes the form of an elongate, generally cylindrical, bolt-like member which is formed from a strong, generally rigid and/or incompressible material such as steel, aluminium, zinc or other metal. Alternatively, a hard plastics material may be used, depending on the application.

The bridging member 52 is provided with an external screw thread 54 formed on its outer surface and extending from a first end 51 thereof, in the manner of a conventional threaded bolt. In the illustrated embodiment, the external screw thread 54 extends along approximately two thirds of the length of the bridging member 52. The external screw thread 54 may, however, be formed along a greater or lesser part of the bridging member 52, including along substantially the full length thereof.

A second end 53 of the bridging member 52 includes an axial bore 56, closed at one end 57, which extends along a portion of the bridging member 52. In the illustrated embodiment the axial bore 56 extends along approximately one half of the length of the bridging member 52. The axial bore 56 may, however, extend along a greater or lesser part of the bridging member 52, including along the full length thereof. The axial bore 56 includes anchor means, in the form of an internal screw thread 58 formed on its internal surface and which extends along almost the full length of the axial bore 56.

The open end of the bore 56 is shaped to define a recess 60 for cooperation with a suitable tool which may be used to turn or twist-drive the bridging member 52. In the illustrated embodiment, the open end of the bore 56 defines a hexagonal recess 60 (best shown in Figure 5b) for engagement with a hexagonal key. Alternatively, or in addition, the recess 60 may be shaped for cooperation with a flat- or cross-head screwdriver or other twist-drive tool.

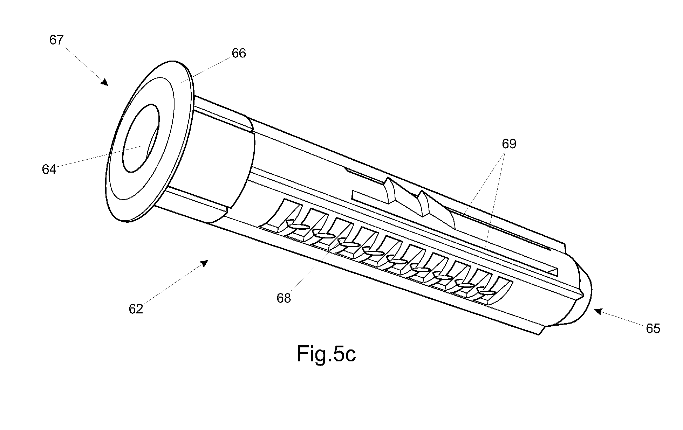

The apparatus 50 also includes a second member 62, referred to herein as a plug member and shown in perspective view in Figure 5c. The plug member 62 is broadly similar in form to a conventional wall plug or wall anchor such as that described above. More specifically, the plug member 62 takes the form of a generally cylindrical tube 62 having an internal, axially extending bore 64 which is closed at one end 65. The other end 67 of the tube 62 is open and features a radially outwardly extending lip or flange 66, the purpose of which is described below.

In the illustrated embodiment, apart from the flange 66, the external diameter of the plug member 62 is substantially constant along its length. Nevertheless, as shown in the Figure 5c, the plug member 62 may be tapered slightly towards the closed end 65 of the tube to aid insertion into a drilled hole, as described below. Furthermore, ribs 68 or other protruding features may be provided on the outer surface of the plug member 62 to increase friction and/or hinder rotation of the tube within the drilled hole.

The plug member 62 may be formed from a deformable material that is flexible and/or resilient. In the illustrated embodiment, the tube 62 is formed from a plastics material of the type used for conventional wall plugs or anchors. Longitudinal slots 69 may be provided to increase the flexibility and deformability of the wall of the plug member 62.

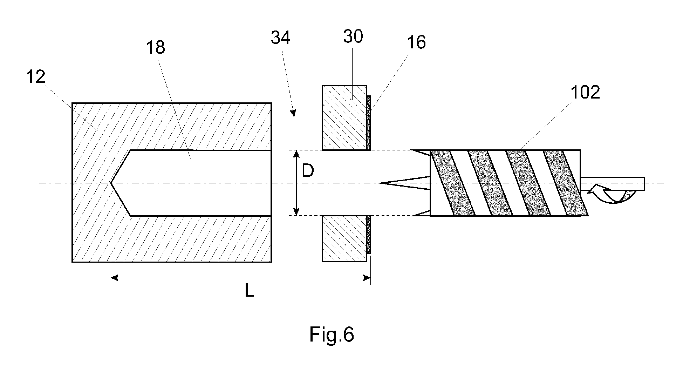

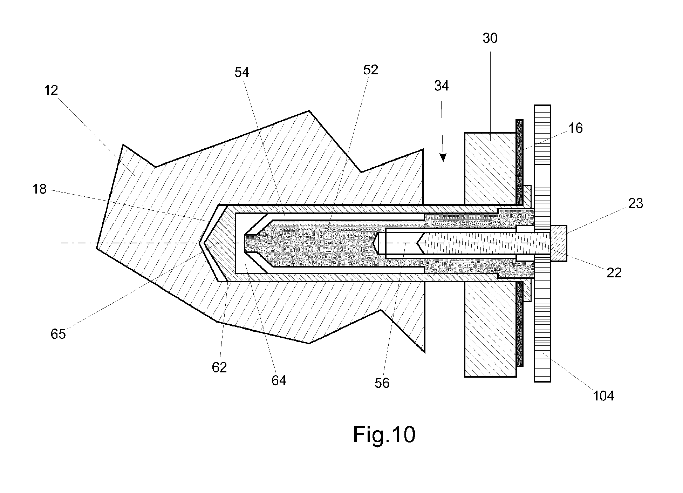

Referring now to Figures 6-10, these illustrate the installation and use of the apparatus of Figures 5a - 5c in a conventional cavity or dry-lined wall, such as that described above.

In a first step, shown in Figure 6, a recess or hole 18 is drilled through the skim 16 and plasterboard 30 layers and into the underlying brickwork 12 using a suitable drill 102 such as a masonry drill. The hole 18 is drilled with a diameter D suitable to permit the plug member 62 to be inserted therein and to a depth L, as measured from the plaster skim surface 16, equal to or slightly greater than the length of the apparatus 50. Suitable values for D and L might be, for example, 14mm ― 16mm and 90mm, respectively, although it will be appreciated that other values can be used, depending on the application.

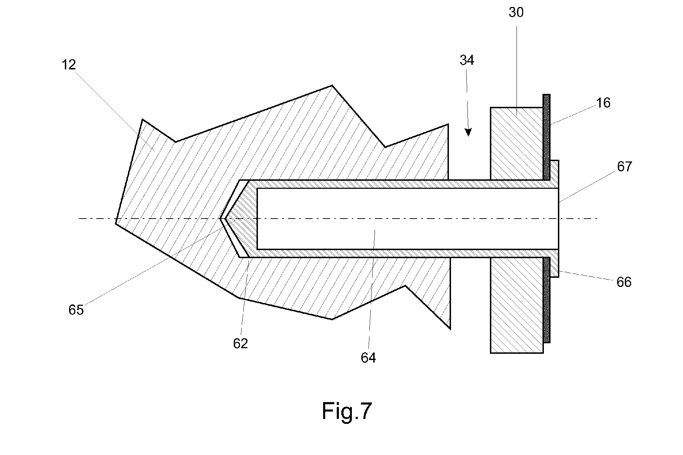

In a second step, shown in Figure 7, the plug member 62 is inserted into the drilled hole 18 until the flange 66 abuts the skim layer 16. It will be appreciated from the foregoing that the length of the plug member 62 should be sufficient to extend through the plasterboard 30, across the gap 34 and into the hole 18 in the brickwork 12 by an amount suitable to permit the plug member 62 to be secured in the hole 18. By way of example, a tube length of approximately 60-90mm may be suitable for most applications although, of course, other lengths are also possible.

Irrespective of the actual depth of the drilled hole 18, further insertion of the plug member 62 therein is prevented by the abutment of the rigid flange 66 with the plasterboard 30 and skim layers 16. The method until this point is similar to the installation of a large conventional wall plug in that the plug member 62 is not secured in the hole 18 and can be easily withdrawn if desired.

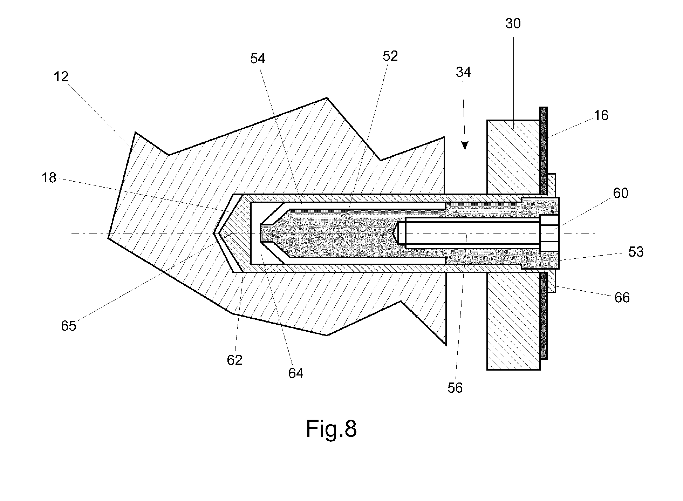

In a subsequent step, shown in Figure 8, the bridging member 52 is inserted into the plug member 62. Insertion of the bridging member 52 is achieved by inserting a suitably shaped tool, such as a hexagonal key, screwdriver or the like, into the recess 60 defined in the free end 53 thereof and twist-driving it into the bore 64 of the plug member 62 such that the external screw thread 54 becomes threadedly engaged with the wall of the plug member 62. Since the plug member 62 is formed from a deformable material, the external thread 54 is able to cut into the wall of the tube 62 so as to form a complementary internal thread therein. This internal thread (not shown) cooperates with the external thread 54 so as to secure the bridging member 52 within the plug member 62. It will be understood from the foregoing that the mechanics of securing of the bridging member 52 in the plug member 62 is substantially identical to that of securing of a screw in a standard wall plug.

It will be appreciated that the illustrated arrangement permits the bridging member 52 to be driven into the plug member 62 by a variable amount, or to substantially any depth within a range defined by the length of the tube 62 and/or the length of the external thread 54. The actual depth of insertion of the bridging member 52 can be selected as desired in dependence on the application and/or the structure of the dry-lined wall. It is considered, however, that performance of the apparatus is optimised if, as shown in Figure 8, the bridging member 52 is screwed into the plug member 62 until its free end 53 is substantially flush with, or protruding fractionally from, the flange 66 at the open end 67 of the plug member 62, that is to say slightly raised above the surface of the plaster skim 16.

Alternatively, where the wall surface is irregular, the bridging member 52 can be inserted to a depth which effectively provides a flat plane for mounting of the object to the wall.

The screwing of the bridging member 52 into the plug member 62 causes the wall of the plug member 62 to expand radially outwardly within the hole 18 against the brickwork 12, so as to generate a frictional engagement, or interference fit, therebetween. The plug member 62 is thereby securely anchored within the hole 18 and is able to resist withdrawal in a manner similar to that employed by conventional wall plugs. As a result, both the plug member 62 and the bridging member 52 are firmly and rigidly fixed in position relative to the wall 12.

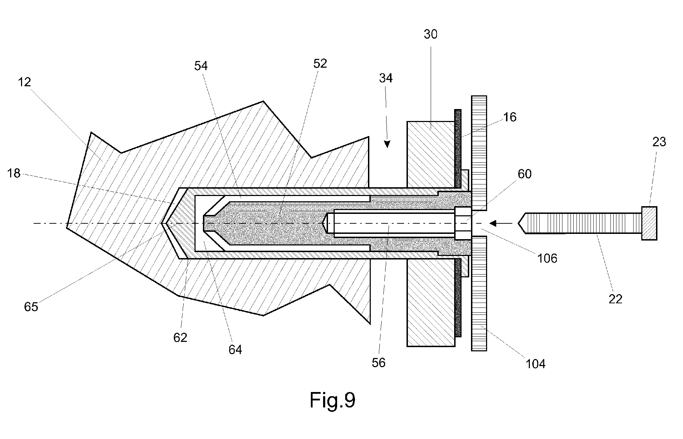

Referring now to Figure 9, an object 104 to be mounted to the wall is offered up so that a mounting hole 106 thereof is substantially aligned with the bore 56 of the bridging member 52. A threaded fastener 22, such as a conventional threaded bolt, is then inserted through the mounting hole 106 in the object 104 and twist-driven into threaded engagement with the internal screw thread 58 in the axial bore 56 of the bridging member 52 using a suitable tool such as a screwdriver.

As the threaded fastener 22 is tightened, the object 104 is pulled towards the plasterboard and skim surface 30, 16 until it comes into abutment with the free end 53 of the bridging member 52 and/or the flange 66 of the plug member 62. Since both the plug member 62 and the bridging member 52 are securely mounted to the brickwork 12 of the wall, screwing of the threaded fastener 22 into the axial bore 56 of the bridging member 52 does not cause withdrawal of the apparatus 50 from the hole 18. Moreover, since the threaded fastener 22 is screwed into the secured bridging member 52, once the object 104 comes into abutment with the bridging member 52 or the flange 66 of the plug member 62, further movement of the object 104 towards the plasterboard surface 30 is substantially prevented. Thus, the object 104 is effectively clamped between the head 23 of the threaded fastener 22 and the end 53 of the bridging member 52 and/or the flange 66 of the plug member 62.

It will be understood that, in contrast with conventional wall plugs (wherein over-tightening of the fixing screw 22 causes a lateral load to be applied to the plasterboard 30, potentially leading to failure as shown in Figure 4), the arrangement of the present invention is such that little or substantially no lateral or horizontal load is applied to the plasterboard 30 - further tightening (e.g. over-tightening) of the threaded fastener 22 simply results in a greater compressive load being applied to the object itself between the head 23 of the fixing screw 22 and the end 53 of the bridging member 52 or the flange 66 of the plug member 62.

Since the bridging member 52 is firmly secured in the plug member 62, and hence fixed relative to the brickwork 12 (by virtue of the frictional engagement between the plug member 62 and the walls of the hole 18) so that axial movement of the bridging member 52 relative to the brickwork 12 is inhibited, the object 104 is effectively fixed in a position spaced (slightly) from the skim surface 16 and the plasterboard layer 30. Consequently, substantially no lateral loading (that is to say loading directed towards the brickwork 12 of the wall) is applied to the plasterboard layer 30. Furthermore, the rigidity and incompressibility of the bridging member 52 ensures that vertical loading on the plasterboard layer 30 (that is to say loading acting in a direction parallel to the plasterboard surface) is also greatly reduced. As a result, distortion or cracking of the plasterboard 30 is reduced or substantially eliminated. The threaded fastener 22 could, theoretically, be tightened as much as desired without adversely affecting the plasterboard layer 30.

While the apparatus shown in Figures 5a - 5c and described above represents a particularly advantageous embodiment of the invention, there are, nevertheless, a number of modifications or alternatives envisaged within the scope of the present invention.

For example, in one embodiment (not shown), the bridging member 52 is arranged to be secured directly within the hole or recess 18 in the wall. In this embodiment, therefore, the plug member 62 is eliminated. In order to achieve secure location of the bridging member 52 within the hole 18, the external screw thread 54 is adapted to engage directly with the material of the supporting structure or brickwork 12 of the wall, in the manner of a conventional concrete bolt. The skilled artisan will immediately recognise the nature of the screw thread required to achieve such a direct engagement and further detail is therefore not considered necessary. Alternatively, or in addition, a suitable adhesive or filler may be used to secure the bridging member within the hole 18.

It will be understood that, in this embodiment, the step shown in Figure 7 is eliminated. Furthermore, the bridging member 52 should be screwed into the hole 18 to a depth such that its free end protrudes slightly from, that is to say raised slightly above, the surface of the skim layer 16. Again, however, in use the threaded fastener 22 is driven into the axial bore 56 of the bridging member 52 so as to threadedly engage with the internal screw thread 58 thereby to clamp the object 104 between the head 23 of the threaded fastener 22 and the free end 53 of the bridging member 52.

In another embodiment (not shown) the plug member 62 is replaced by a conventional wall plug, (i.e. a plug without a radially outwardly extending flange) which is arranged to be inserted fully into the hole 18. In this embodiment, the bridging member 52 is secured in the hole 18 by screwing it into the wall plug, in a manner similar to that of the illustrated embodiment. Again, however, the bridging member 52 should be screwed into the hole 18 to a depth which leaves a fractional length of the bridging member 52 protruding from the skim layer 16. This is to ensure that the object 104 can be clamped between the head 23 of the threaded fastener 22 and the end 53 of the bridging member 52, rather than between the threaded fastener and the plasterboard and skim layer 30, 16.

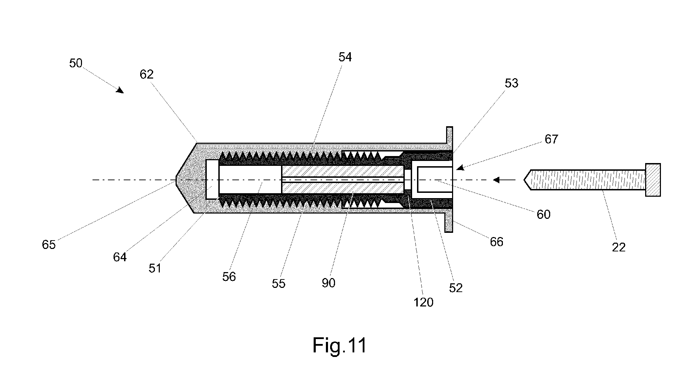

An alternative embodiment is shown in Figure 11. In this embodiment, the bridging member 52 comprises an elongate, generally cylindrical tube having an axial bore 56 that extends along the full length of the bridging member 52 and is open at both ends. The wall 55 of the bridging member 52 features a radially inwardly projecting rim 120 at a point close to one end 53 thereof so as to define a restriction within the bore 56. In the illustrated embodiment, the diameter of the bore 56 between the rim 120 and the end 53 of the bridging member 52 is smaller than that between the rim 120 and the other end 51 thereof. The bridging member 52 is sized and shaped for insertion into, and cooperation with, the bore 64 of the plug member 62.

In this embodiment, the apparatus also includes a third member in the form of an anchor member 90 disposed within the axial bore 56 of the bridging member 52. The anchor member 90 takes a form broadly similar to that of a conventional wall plug or wall anchor, being generally tubular in shape and formed from a deformable plastics material. The external diameter of the anchor member 90 is comparable with the diameter of the axial bore 56 in the bridging member 52 and is greater than that of the restriction formed by the inwardly projecting rim 120.

The anchor member 90 performs the function of, and thereby replaces, the internal screw thread 58 provided in the axial bore 56 of the bridging member 52 shown in the embodiment of Fig 5a and is adapted to receive, and engage with, a threaded fastener 22.

Installation of the apparatus is identical to that described in Figures 7 ― 10 above, with the exception that the threaded fastener 22 is driven into engagement with the anchor member 90 disposed within the axial bore 56 of the bridging member 52 rather than the internal screw thread 58. In this respect, it is considered that a conventional screw, rather than a threaded bolt, may be a more suitable form of threaded fastener 22 to use with this embodiment.

Withdrawal of the anchor member 90 from the bridging member 52 as the threaded fastener 22 is driven into it is inhibited by the inwardly directed rim 120. As the fixing screw 22 is driven into the anchor member 90, the latter is caused to expand within the bore 56 of the bridging member 52 so that it is securely located therein. At this point, the anchor member 90 is able to resist axial movement relative to the bridging member 52 and, hence, relative to the brickwork 12. Again this aspect is, in principle, similar to using a conventional wall plug.

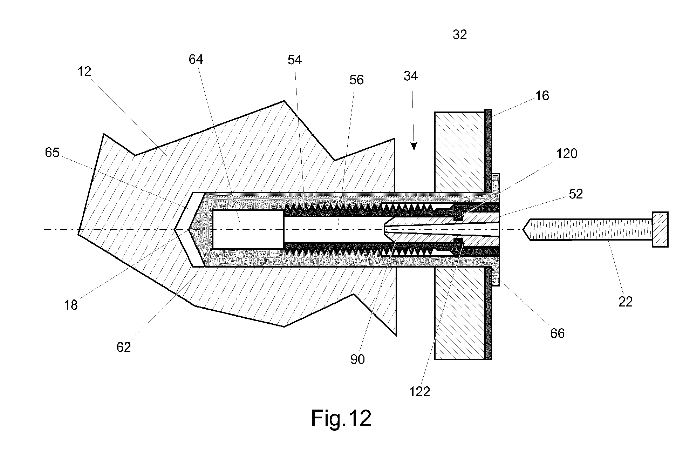

The embodiment of Figure 11 requires the anchor member 90 to be inserted into the bridging member 52 from the end 53 prior to insertion of the bridging member 52 into the plug member 62. An alternative embodiment shown in Figure 12, however, provides the anchor member 90 with an annular groove or recess 122 formed in the outer surface of the anchor member 90 which, in use, is arranged to engage with the inwardly directed rim 120. Owing to the flexibility of the material forming the anchor member 90, insertion of the anchor member 90 into the bore 56 of the bridging member 52 can be achieved through the end 53 after insertion of the latter into the plug member 62 and permits a "snap fit" engagement of the rim 120 with the groove 122. This snap fit secures the anchor piece 90 within the bridging member 52 so as to prevent axial movement, e.g. over insertion or withdrawal from the bore 56, during insertion of the threaded fastener 22.

In a variation of the embodiment of Figure 12 (not shown), the annular rim 120 provided within the bridging member 52 may be replaced by one or more discreet, inwardly directed projections which are adapted to cooperate with similarly shaped recesses defined in the outer surface of the anchor member 90. Not only does this arrangement resist withdrawal of the anchor member 90 from the bridging member 52 but it also assists the anchor member 90 to resist free rotation within the bridging member 52 when the fixing screw 22 is driven into it.

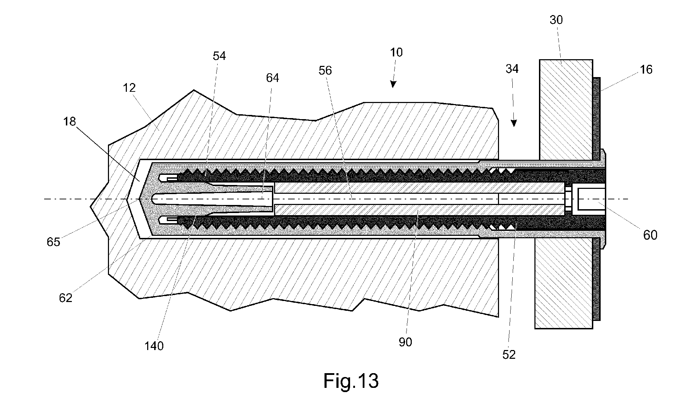

In the embodiment of Figure 13, in which the anchor piece 90 takes the form of that shown in Figure 11, elongate projections 140 formed integrally with the plug member 62 and extending coaxially along the bore 64 from the closed end 65 thereof towards the open end 67 prevent axial movement of the anchor member 90 within the bore 56 of the bridging member 52.

It is envisaged that the anchor member 90 may be provided as a separate component from the bridging member 52 or as an integral part thereof.

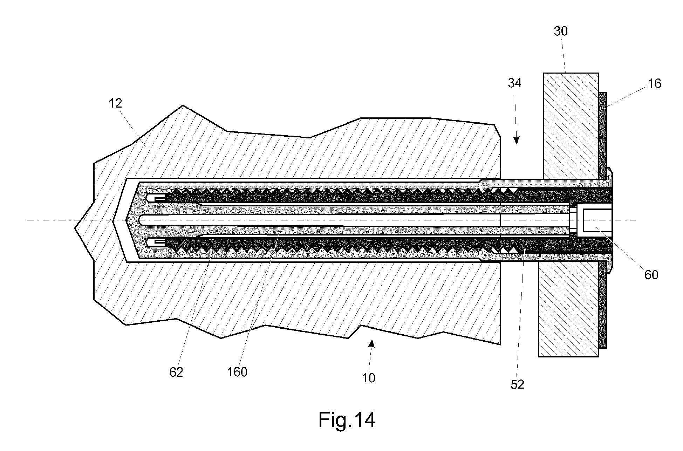

Alternatively, the anchor member 90 may be integrally formed with the plug member 62. For example, in Figure 14 the elongate projection 140 is shaped to define a tube 160 which extends substantially along the full length of the bore 64. The outer diameter of the tube 160 is slightly smaller than the inner diameter of the bore 52 such that as the bridging member 52 is inserted into the plug member 62, the tube 160 is received within the bore 56.

The tube 160 is, for example by the provision of suitable slots disposed therein, arranged to expand radially outwardly within the bore 56 of the bridging member 52 when the threaded fastener 22 is inserted therein, in the manner of a conventional wall plug. In this way, the threaded fastener 22, the bridging member 52 and the plug member 62 are effectively interlocked providing an exceptionally stable and secure fixing.

This embodiment may advantageously reduce the deleterious effects of "creep", wherein long-term flexing or relaxing of the plastic materials forming the plug member and the anchor member 90 can compromise the interference fit between the anchor member 90 and the bridging member 52 or between the plug member 62 and the surrounding brickwork 12 of the hole 18.

In this embodiment, as well as the others described above, one or more radially outwardly directed grooves (not shown) may be machined into the wall of the bore 56, extending along at least a portion of its length, which are arranged to cooperate with corresponding fins projecting radially outwardly from the outer surface of the anchor piece 90. The cooperation of the fins in the grooves serves to hinder rotation of the anchor piece 90 within the bore 56 when the threaded fastener is inserted therein.

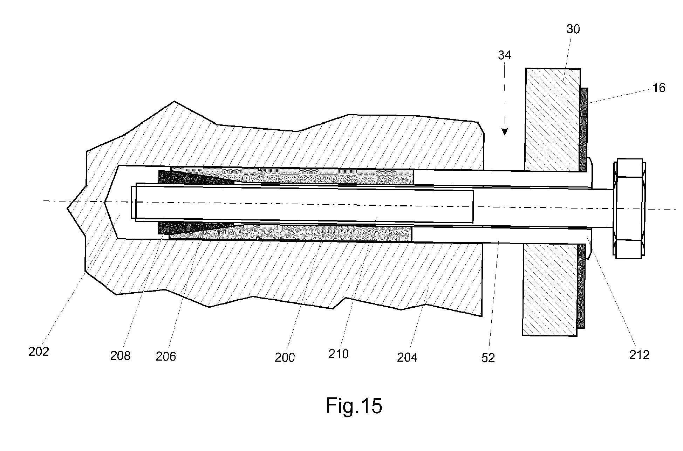

In a still further embodiment, shown in Figure 15, the invention comprises a novel modification to a conventional shield anchor. Shield anchors usually comprise a first member in the form of a generally rigid sleeve 200 arranged to be inserted into a hole 202 formed within a brick or concrete structure 204. One end of the sleeve 200 has a number of axial cuts formed in it to define a plurality of leaves or wings 206. A second member, in the form of a generally frusto-conical nut 208 having an internal screw thread, is seated within a recess defined by the wings 206.

In use, the sleeve 200 is inserted into the hole 202 with the wings 206 and nut 208 directed towards the closed end of the hole. A threaded fastener in the form of an elongate bolt 210, sometimes called a lag bolt, is inserted into the sleeve 200 and rotated into threaded engagement with the nut 208. Further rotation of the bolt 210 causes the nut 208 to be drawn further into the recess defined by the wings 206, thereby causing the wings to deform or splay radially outwardly against the sides of the hole 202. This radial expansion secures the sleeve 200 within the hole in a manner broadly similar to that of conventional wall plug arrangements.

Such shield anchors are not generally used for securing objects to cavity walls since they provide no means for preventing deformation of the plasterboard as described above. In the embodiment of Figure 15, however, the sleeve 200 is lengthened and a radially outwardly directed flange 212 is provided on the end distal from the wings 206.

In use, the sleeve 200 is inserted into the hole 202 until the flange 212 engages with the outer surface of the plasterboard layer 30. Further insertion is thereafter prevented. The object is offered up and the threaded bolt 210 is inserted through the fixing hole and into the sleeve 200 until it is engaged with the nut 208. The bolt is then tightened which has the dual effect of securing the sleeve in the hole 202, as described above, and causing the object to be clamped between the head of the bolt 210 and the flange 212, the incompressibility of the sleeve 200 preventing the object from exerting a potentially damaging lateral load on the plasterboard 30, virtually irrespective of how much the bolt is tightened.

It can be seen that the present invention provides a simple yet highly effective means for supporting an object on a cavity or dry-lined wall. For the sake of clarity, the term "cavity wall" is used herein to refer primarily to dry-lined walls having an underlying brickwork or masonry supporting structure and an outer, plasterboard or wallboard layer separated from the supporting structure by a gap or cavity, as shown in Figure 3.

Nevertheless, the application of the invention is not limited to cavity or dry-lined walls and embodiments of the invention may be used with other structures, including walls which are not cavity-based or layered. For example, embodiments of the invention may advantageously be used with older style walls such as those described with reference to Figures 1 and 2 since the invention may reduce or substantially eliminate damage to the outer plaster through over-tightening of the threaded fastener.

In embodiments thereof, the long fixing screw used in conventional fixing arrangements is replaced by a rigid bridging member which itself forms an anchoring for a shorter fixing screw or bolt. The strength, rigidity and incompressibility of the bridging member permits even large, heavy objects to be supported without imposing excessive or potentially damaging loads upon the relatively fragile plasterboard. The load is carried substantially entirely by the brickwork through the bridging member and is not transmitted to the plasterboard. The invention also provides the advantage that only a single drilling step is required to install the apparatus.

It is envisaged, for example, that the mounting of kitchen units, cupboards, bookshelves, boilers, radiators, televisions or other heavy objects may all benefit from use of the present invention.

While only selected embodiments have been chosen to illustrate the present invention, it will be apparent to those skilled in the art that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time.

Each feature and/or method step recited in the appended claims or disclosed hereinabove may be taken independently or in combination with any other feature and/or method step. Multiple features and/or method steps may be combined and any and all such combinations are intended to be included within the scope of this application.

Every feature and/or method step which is unique from the prior art, alone or in combination with other features and/or method steps, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from UK Patent Application No. GB0605164.3, filed 15th March 2006, the contents of which are expressly incorporated by reference herein.

## Claims

1. An apparatus for fixing an object to a wall or other structure having an outer layer (30) and an underlying supporting structure (12) spaced therefrom by a cavity (34), the apparatus comprising:
support means (52) arranged to be inserted through the outer layer (30) and into a recess (18) in the supporting structure so as to bridge the cavity (34); and
a bore (56) formed in the support means (52) for anchoring at least a portion of a threaded fastener (22) to the support means (52);
**characterised in that** the support means (52) comprises an external thread adapted for threaded engagement with the material of said supporting structure.

2. An apparatus as claimed in claim 1, wherein the arrangement is such that, in use, the object may be clamped between at least a part of the threaded fastener (22) and the support means (52).

3. An apparatus as claimed in claim 1 or claim 2 wherein the bore (56) includes an internal screw thread (58) for threaded engagement with the threaded fastener (22).

4. An apparatus as claimed in any preceding claim wherein the support means (52) comprises at least one recess or projection (60) adapted to cooperate with a tool or device for twist-driving the support (52) means into the recess (18).

5. An apparatus as claimed in any preceding claim wherein the support means (52) includes at least one recess (60) adapted to cooperate and/or engage with a hexagon key or screwdriver for screwing the support means (52) into the recess (18).

6. An apparatus as claimed in any preceding claim wherein the support means (52) comprises a bridging member formed from a generally rigid material such as a metal or plastics material.

7. An apparatus as claimed in any preceding claim, wherein the support means (52) is formed from steel.

8. A bolt comprising a shaft (52) having an external screw thread adapted for engagement in a recess formed in a substrate and an internally-threaded bore formed in the shaft for anchoring at least a portion of a threaded fastener therein.

9. A bolt as claimed in claim 7, wherein the screw thread is adapted for engagement with a brick, block or concrete substrate.

10. A bolt as claimed in claim 8 or claim 9, comprising a concrete bolt.

11. A kit comprising a threaded fastener and an apparatus or a bolt as claimed in any preceding claim.

12. A method for fixing an object to a wall surface having an outer layer and an underlying supporting structure, the outer layer being spaced from the supporting structure by a cavity, the method comprising:
drilling through the outer layer and into the supporting structure to form a recess therein;
threadedly engaging at least a part of a first member in the recess;
inserting a threaded fastener through a fixing hole in the object and into the first member; and
screwing the threaded fastener into the first member thereby to clamp at least a part of the object between a portion of the threaded fastener and the first member.

13. A method as claimed in claim 11 wherein the step of securing comprises threadedly engaging the first member in the recess such that a free end of the first member lies substantially flush with, or slightly raised from, an outer surface of the outer layer.
